# EUROPEAN PATENT SPECIFICATION

(11) **EP 2 530 317 B1**
(45) Date of publication and mention of the grant of the patent: **12.11.2014**
(21) Application number: 11168686.1
(22) Date of filing: 03.06.2011
(51) Int. Cl.: C08G 73/14, C09D 179/08, F04B 1/04, F04D 5/00, F04D 29/02

(54) **Bearing coating for fuel lubricated fuel pumps**
Lagerbeschichtung für kraftstoffgeschmierte Kraftstoffpumpen
Revêtement de roulement pour pompes à carburant lubrifiées par le combustible

(43) Date of publication of application: 05.12.2012
(73) Proprietor: Perkins Engines Company Limited, Eastfield Peterborough PE1 5NA (GB)
(72) Inventor: Wallace, Ian, Peterborough, PE7 8NF (GB)
(74) Representative: Kramer - Barske - Schmidtchen

(56) References cited:
- DE-A1-102005 026 664
- DE-A1-102008 055 194

## Description

### Technical Field

The present disclosure generally refers to a fuel pump component configured to be supported in or to provide a friction/plain bearing of a fuel lubricated fuel pump as, e.g. a high-pressure fuel pump configured to supply fuel at high-pressure to a common rail fuel supply system. The present disclosure particularly refers to a fuel pump shaft, a feed pump rotor, a fuel pump plunger, a feed pump plate, and a feed pump casing.

### Background

The scuff and/or seizure resistance of a bearing within a fuel lubricated fuel pump is limited by the lubricity of the fuel being pumped. For diesel fuels the lubricity may be defined as the wear scar of the fuel. The wear scar itself is the measurement of the scar diameter left on a spherical steel test sample that has undergone a reciprocating motion loaded test whilst submerged in a bath of the liquid being tested. The smaller the scar diameter the better the fluid acts as a lubricant. European diesel has a maximum wear scar by specification of 460 µm and US diesel has a maximum specified limit of 520 µm. The specified limit is not always achieved however as winter fuel requires a higher blend of kerosenes to prevent filter plugging and aid cold flow. Kerosenes may be defined as flammable hydrocarbon oil usually obtained by distillation of petroleum and used as a fuel, solvent, and thinner.

Fuels within these lubricity specifications normally pose no problems to the reliability and life expectancy of fuel pumps mentioned herein. However, there are many high value applications that use diesel engines fueled with kerosene based fuels. Kerosenes can have wear scar values up to 800 µm. Supplying these fuels in fuel lubricated fuel pumps may lead to rapid wear and failure.

US 7,665,954 B2 discloses an electrical submersible pump. The pump has a runner arranged for connection to an electric motor and provided with an eccentric member arranged to drive a plunger, the runner having a polyamide layer on its bearing surface to reduce friction. However, this pump is driven by an electric motor and is not configured to be used as a fuel pump. Furthermore, medium delivery passages are configured differently. This electric submersible pump is particularly configured to lift liquids such as oil, water, or brine. They are typically long relative to their diameter to fit down drilled holes.

DE 10 2008 055194 A1 discloses a sliding coating consisting of one or more layers for sliding elements used at high sliding speeds in high temperature environments. The sliding coating may contain polymers such as PAI, PI, epoxy resin, PBI and/or silicon resin as bonding agent. Further bonding agents can be high-melting thermoplastic material or duroplastic material. Metal sulphites with layered structure, graphite, hexagonal boron nitrite and/or PTFE may be chosen as lubricants and SiC, Si₃N₄, B₄C₃, cubic BN, TiO₂ or SiO₂ and metal powder made of Ag, Pb, Au, SnBi and/or Cu may be chosen as hard materials. To increase load capacity with enhanced wear resistance the sliding layer material contains Fe₂O₃ with a preferred fraction of 0.1 to 15 vol. %.

The present disclosure is directed, at least in part, to improving or overcoming one or more aspects of prior systems.

### Summary of the Disclosure

In a first aspect the present disclosure refers to a fuel pump component configured to be supported in a friction/plain bearing of a fuel lubricated fuel pump. The fuel pump component may comprise at least one friction bearing surface area provided with a polyamideimide based coating with added lubricant and hard particle enhancements. That fuel pump component may be selected from the group consisting of a fuel pump shaft configured to be used in the fuel lubricated fuel pump, a feed pump rotor configured to be mounted on a fuel pump shaft of the fuel lubricated fuel pump, a plunger configured to be used in the fuel lubricated fuel pump, a feed pump plate, and a feed pump casing configured to be used in the fuel lubricated fuel pump.

In a second aspect the present disclosure refers to a method for manufacturing a fuel pump component configured to be supported in a friction/plain bearing of a fuel lubricated fuel pump. The method may comprise a step of providing a fuel pump component configured to be supported in a friction/plain bearing of a fuel lubricated fuel pump and including at least one friction bearing surface area. The method may comprise a step of depositing a polyamideimide based coating with added lubricant and hard particle enhancements on the at least one friction bearing surface area.

The added lubricants may be selected from the group consisting of graphite, MoS₂, WS₂, and PTFE. The hard particle enhancements may be selected from the group consisting of TiO₂, AlsO₃, MgO, ZeO₂, SiC, Si₃N₄, glasses, and metallic hard materials.

The polyamideimide based coating with added lubricant and hard particle enhancements mentioned herein may be identical to the coating sold commercially under IROX™ coating by Federal-Mogul Corp., U.S.A. Said IROX™ coating has been developed for internal combustion engine bearings for new high output automotive engines, see e.g. paper ICEF2010-35114, published at Proceedings of the ASME 2010 Internal Combustion Engine Division Fall Technical Conference ICEF, September 12-15, 2010, San Antonio, Texas, U.S.A.

As an alternative the polyamideimide based coating with added lubricant and hard particle enhancements mentioned herein may be identical with one of the coatings of DE 10 2005 026 664 B4, but disclosed only to be used on a piston of an internal combustion engine. Accordingly, the polyamideimide based coating with added lubricant and hard particle enhancements mentioned herein may be a PTFE-free varnish layer based on PAI, comprising e.g. 5 to 15 wt% zine sulfide, 5 to 15 wt% graphite or MO₂ and 5 to 15 wt% TiO₂, wherein zine sulfide and TiO₂ have a particle size of, e.g. ≤ 0.7 µm.

Other features and aspects of this disclosure will be apparent from the following description and the accompanying drawings.

### Brief Description of the Drawings

Fig. 1 is a schematic illustration of a fuel system comprising a high-pressure fuel pump provided with a fuel pump component according to one exemplary embodiment;

Fig. 2 is a cross-sectional side view of a high-pressure fuel pump provided with a fuel pump component according to one exemplary embodiment and to be used in a fuel system shown in Fig. 1;

Fig. 3 is a schematic side view of a fuel pump shaft of the fuel pump of Fig. 2 according to another exemplary embodiment;

Fig. 4 is a cross-sectional side view of high-pressure fuel pump of another type of pump including a fuel pump component according to one exemplary embodiment.

Fig. 5 is a cross-sectional end view of the high-pressure fuel pump of Fig. 4; and

Fig. 6 is a schematic side view of a fuel pump shaft of the fuel pump of Fig. 5 according to another exemplary embodiment.

### Detailed Description

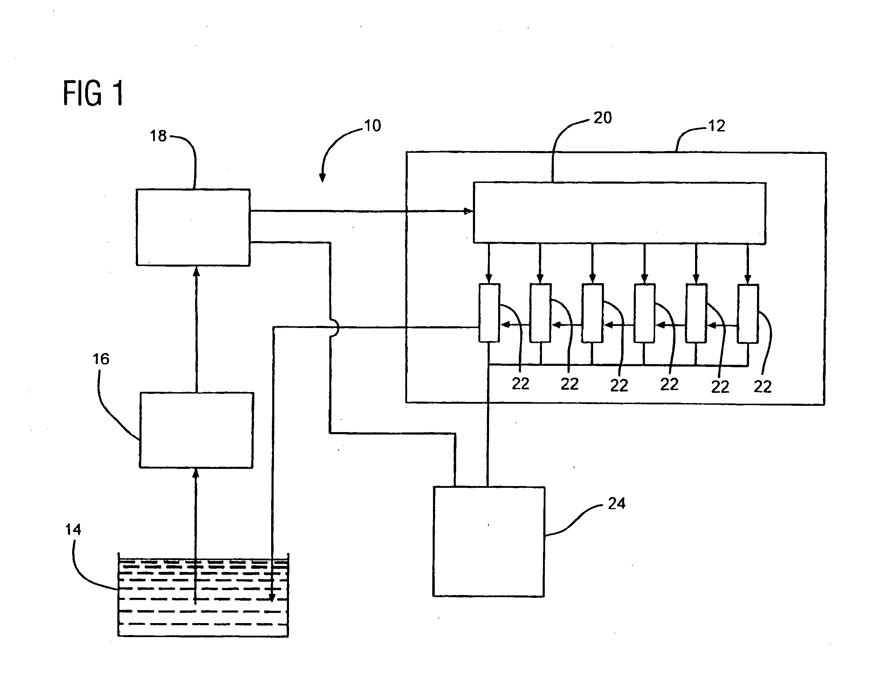

Referring generally to Figure 1, a fuel system 10 is shown according to one exemplary embodiment. Fuel system 10 may be a system of components that cooperate to deliver fuel (e.g., diesel, gasoline, heavy fuel, gas, etc.) from a location where fuel is stored to the combustion chamber(s) of an engine 12 where it will combust and where the energy released by the combustion process will be captured by engine 12 and used to generate a mechanical source of power.

Although depicted in Fig. 1 as a fuel system for a diesel engine, fuel system 10 may be the fuel system of any type of engine (e.g., internal combustion engine such as a diesel or gasoline engine, a turbine, etc.). According to one exemplary embodiment, fuel system 10 may include a tank 14, a transfer pump 16, a high-pressure pump 18, a common rail 20, fuel injectors 22, and an electronic control module (ECM) 24. The high-pressure pump 18 may be equipped with a low-pressure pump (not shown). This low-pressure pump may be provided with one or more fuel pump components as described herein.

Tank 14 may be a storage container that stores the fuel that fuel system 10 will deliver. Transfer pump 16 pumps fuel from tank 14 and delivers it at a generally low pressure to high-pressure pump 18. High-pressure pump 18, in turn, may pressurize the fuel to a high pressure and may deliver the fuel to common rail 20. Common rail 20, which is possibly intended to be maintained at the high pressure generated by high-pressure pump 18, may serve as the source of high-pressure fuel for each of fuel injectors 22. Fuel injectors 22 may be located within engine 12 in a position that enables fuel injectors 22 to inject high-pressure fuel into the combustion chambers of engine 12 (or into pre-chamber or ports upstream of the combustion chamber in some cases) and generally serve as metering devices that control when fuel is injected into the combustion chamber, how much fuel is injected, and the manner in which the fuel is injected (e.g., the angle of the injected fuel, the spray pattern, etc.).

Each fuel injector 22 may be continuously fed fuel from common rail 20 such that any fuel injected by a fuel injector 22 may be quickly replaced by additional fuel supplied by common rail 20. ECM 24 may be a control module that receives multiple input signals from sensors associated with various systems of engine 12 (including fuel system 10) and indicative of the operating conditions of those various systems (e.g., common rail fuel pressure, fuel temperature, throttle position, engine speed, etc.). ECM 24 may use those inputs to control, among other engine components, the operation of high-pressure pump 18 and each of fuel injectors 22. The purpose of fuel system 10 might be to ensure that the fuel is constantly being fed to engine 12 in the appropriate amounts, at the right times, and in the right manner to support the operation of engine 12.

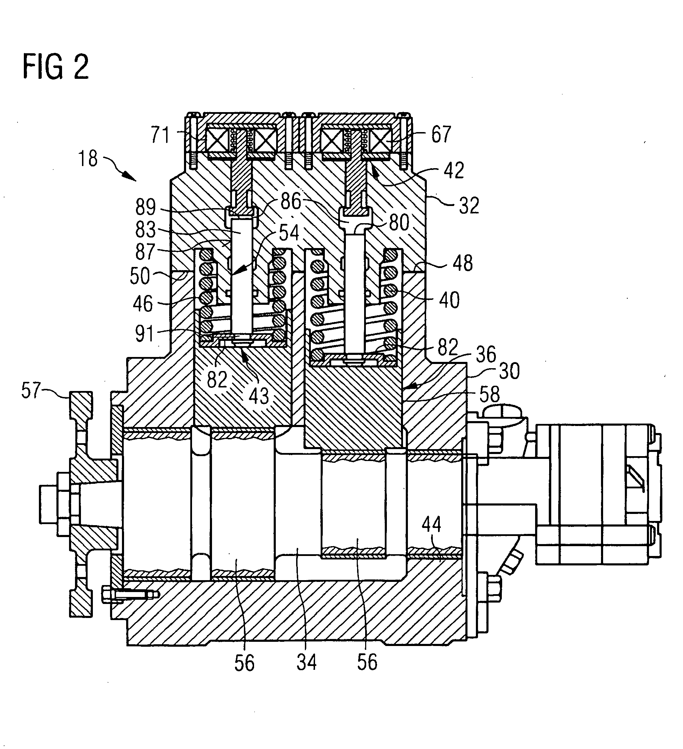

Referring now to Fig. 2, high-pressure pump 18 may be configured to increase the pressure of the fuel from a pressure that is sufficient to transfer the fuel from the tank to a pressure that is desirable for the injection of the fuel into the combustion chambers of engine 12 (or injection elsewhere). Such injection pressures may vary between different applications, but often range between approximately 1500 bar and 2000 bar, and may include pressures that are below 1500 bar or above 2000 bar.

According to one exemplary embodiment, pump 18 may include a housing 30, a head 32, a camshaft 34, two tappet assemblies 36, two resilient members 40, two plunger assemblies 43, and two control valve assemblies 42. Housing 30 may be a rigid structure that generally may serve as the base of pump 18. Housing 30 might include a central bore 44 that is possibly configured to receive camshaft 34, as well as two spaced-apart, parallel tappet bores 46 that may be each configured to receive at least a portion of a tappet assembly 36, a plunger assembly 43, a resilient member 40, and head 32.

The axis of each tappet bore 46 might be arranged perpendicularly (or radially) to the axis of central bore 44 such that the rotation of camshaft 34 within central bore 44 may cause tappet assemblies 36 to translate in a linear, reciprocating manner within tappet bores 46. Near the distal ends of tappet bores 46, housing 30 also includes a face 48 that may be configured to receive head 32.

Head 32 may be coupled to face 48 of housing 30 and might generally serve, among other things, to enclose tappet bores 46, provide a portion of the structure defining pumping chambers 86 (discussed below), receive control valve assemblies 42, and provide various ports and ducts to direct the flow of fuel into and out of pumping chambers 86. Head 32 may include a face 50 that cooperates with face 48 of housing 30 (and optionally a sealing element such as an o-ring) to provide a sealed interface between head 32 and housing 30. Head 32 may also include a fuel inlet passage (not shown) that might be coupled to transfer pump 16 and a fuel outlet passage (not shown) that might be coupled to common rail 20. Head 32 may also include two apertures 54, each of which might be configured to receive a portion of control valve assembly 42 and a portion of plunger assembly 43. According to various alternative and exemplary embodiments, the relative sizes of the different regions of aperture 54 may vary.

According to one exemplary embodiment head 32 may be integrally formed as a single unitary body. However, according to various alternative and exemplary embodiments, the head may be formed from two or more different pieces or elements coupled together.

Camshaft 34 may be a driven member that is formed from an elongated shaft that might include two sets of cam lobes 56 that are spaced apart along the length of camshaft 34 and a gear or pulley 57 on one of its two ends. Gear or pulley 57 may be a driven member that might be configured to engage another member, such as another gear, a chain, or a belt, that is driven, either directly or indirectly, by engine 12. The two sets of cam lobes 56 may be spaced apart along the length of camshaft 34 so as to correspond with each of the two tappet assemblies 36. According to various exemplary and alternative embodiments, each set of cam lobes 56 may include a single cam lobe, two cam lobes, three cam lobes, or more than three cam lobes, with each cam lobe representing a complete pumping and filling cycle.

According to other various alternative and exemplary embodiments, the two sets of cam lobes may be in phase with one another (such that the cam lobes of the first cam lobe set will pass under head 32 at the same time as the corresponding cam lobes of the second cam lobe set) or they may be out of phase with one another (such that the cam lobes of the first cam lobe set will pass under head 32 at different times than the corresponding cam lobes of the second cam lobe set).

According to other various alternative and exemplary embodiments, the extent to which the cam lobes of the first cam lobe set may be out of phase relative to the cam lobes of the second cam lobe set may vary depending on the application of pump 18 and other factors.

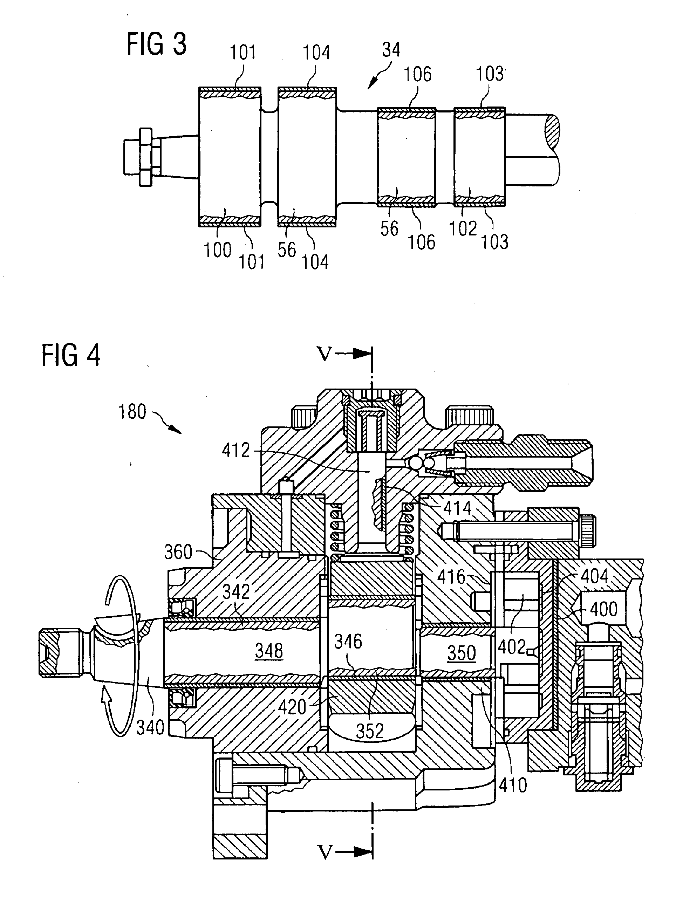

As shown in Fig. 3 the two sets of cam lobes 56 may form friction bearing surface areas for the respective contacting tappet assemblies 36. Each friction bearing surface area may be provided with a polyamideimide based coating 104, 106 with added lubricant and hard particle enhancements as, for example, mentioned herein.

According to other various alternative and exemplary embodiments, the camshaft 34 may be provided with further friction bearing surface areas configured to be supported within the central bore 44 of housing 30. One or both friction bearing surface areas may be provided with the polyamideimide based coating 101, 103 with added lubricant and hard particle enhancements, see e.g. Fig. 3.

Referring again to Fig. 2, each tappet assembly 36 (also sometimes referred to as a lifter assembly) may be configured to engage one of the two sets of cam lobes 56, transform the rotational movement of the corresponding cam lobes 56 into linear movement, and transfer such linear movement to the corresponding plunger assembly 43. Each tappet assembly 36 may include a body 58 that engages and receives a portion of plunger assembly 43 and follows a set of cam lobes 56. Body 58 may be received within the corresponding tappet bore 46 of housing 30 and may translate back and forth within tappet bore 46 as camshaft 34 rotates. Resilient member 40, shown as a compression spring, is an element or member that serves to bias the corresponding plunger assembly 43 and tappet assembly 36 toward camshaft 34. By biasing both the corresponding plunger assembly 43 and tappet assembly 36 toward camshaft 34, resilient member 40 helps to ensure that plunger assembly 43 returns to its lowest position (hereinafter referred to as "bottom dead center") before camshaft 34 completes another rotation (or partial rotation, depending on the cam lobe configuration) and forces plunger assembly 43 back up to its highest position (hereinafter referred to as "top dead center"). This might help to ensure that plunger assembly 43 is performing a complete filling cycle (the cycle where plunger assembly 43 moves from top dead center to bottom dead center) and a complete pumping cycle (the cycle where plunger assembly 43 moves from bottom dead center to top dead center) for each cam lobe 56 in the corresponding cam lobe set of camshaft 34. Plunger assembly 43 may be an assembly of components that is located generally between the corresponding tappet assembly 36 and head 32 and that reciprocate with tappet assembly 36 relative to head 32 to pressurize the fluid within pumping chamber 86.

According to one exemplary embodiment, plunger assembly 43 may include a plunger 80 and a retainer 82. Plunger 80 is a member (e.g., piston, shaft, rod, element, retained member) that is configured to reciprocate or slide within aperture 54 of head 32 as the corresponding tappet assembly 36 reciprocates within tappet bore 46 of housing 30.

According to one exemplary embodiment, plunger 80 may include an elongated, generally cylindrical body 83 having a side wall 87, a first end 89 that is configured to extend into aperture 54, and a second end 91 located near tappet assembly 36. First end 89, parts of aperture 54, and a portion of control valve assembly 42 may define pumping chamber 86, the volume of which changes as plunger 80 moves back and forth, or up and down, within aperture 54.

Retainer 82 may be a component or an assembly of components that couple to plunger 80 and that serve to apply at least a portion of the force provided by resilient member 40 to plunger 80.

Referring to Fig. 2, each control valve assembly 42 generally serves to control the fluid communication between pumping chamber 86 and the fuel being provided by transfer pump 16, and therefore is capable of controlling the amount of fuel that enters pumping chamber 86 during the filling cycle and the amount of fuel that remains in pumping chamber 86 during the pumping cycle.

According to a first exemplary embodiment, control valve assembly 42 may include an actuator 71. A valve element (not shown) is moveable between on open position in which a fuel inlet passage is fluidly connected to pumping chamber 86 and a closed position in which a fuel inlet passage is not fluidly connected to, or is sealed off from, pumping chamber 86. Actuator 71 may be an electronically controlled device that generates movement in response to an electric signal. Within control valve assembly 42, actuator 71 may serve to move a valve element relative to head 32. According to other alternative and exemplary embodiments, the actuator may be replaced by any suitable actuation device that controls the movement of the valve element within the aperture in the head. For example, another actuation device or configuration that may be used may include a piezo controlled actuation system, a hydraulically controlled actuation system, or any other suitable actuation system. Although only one pump configuration was described above, it should be understood that the described pump is only one example of the many different pump types and configurations in which the control valve assembly 42 and head 32 (hereinafter referred to collectively as the head assembly) may be used. For example, while only an inline plunger or piston pump was described above, the head assembly could also be used within any one of a variety of different piston or plunger pump configurations (e.g., axial piston pump, radial piston pump, bent axis pump, inlet metered pump, outlet metered pump, etc.) and with any one of a variety of different fluids (e.g., fuel, oil, hydraulic fluid, etc.). It also should be understood that while pump 18 was described above as including two cylinders or pumping chambers 86, and consequently, two corresponding tappet assemblies 36, resilient members 40, control valve assemblies 42, and plunger assemblies 43, the pump could also be configured to include one, three, four, or more than four pumping chambers, depending on the particular application in which the pump is intended to be used.

Another kind of fuel supply pump 180 is shown in Fig. 4. Fuel supply pump 180 may comprise a camshaft 340 supported within a housing 360 at two shaft parts 348, 350 within two fuel lubricated friction bearings spaced to each other. At one end of camshaft 340 a feed pump rotor 402 is fixedly arranged. Accordingly, during rotation of camshaft 340 feed pump rotor 402 also rotates. Feed pump rotor 402 is arranged within a feed pump casing 400. Feed pump rotor 402 may be provided with a first rotating surface 404 and a second rotating surface 418. Respective opposed surface of the feed pump casing 400 or the rotating surfaces 404, 418 of feed pump rotor 402 may be provided with a polyamideimide based coating with added lubricant and hard particle enhancements as described herein.

The cam lobe 352 of camshaft 340 may also be provided with said polyamideimide based coating with added lubricant and hard particle enhancements, see reference 346. The same applies to the friction bearing surfaces of shaft parts 348, 350 of camshaft 340. The cam lobe 352 may drive a body 420 contacting plunger 412.

A feed pump plate 410 may be provided and be coated with the coating mentioned herein.

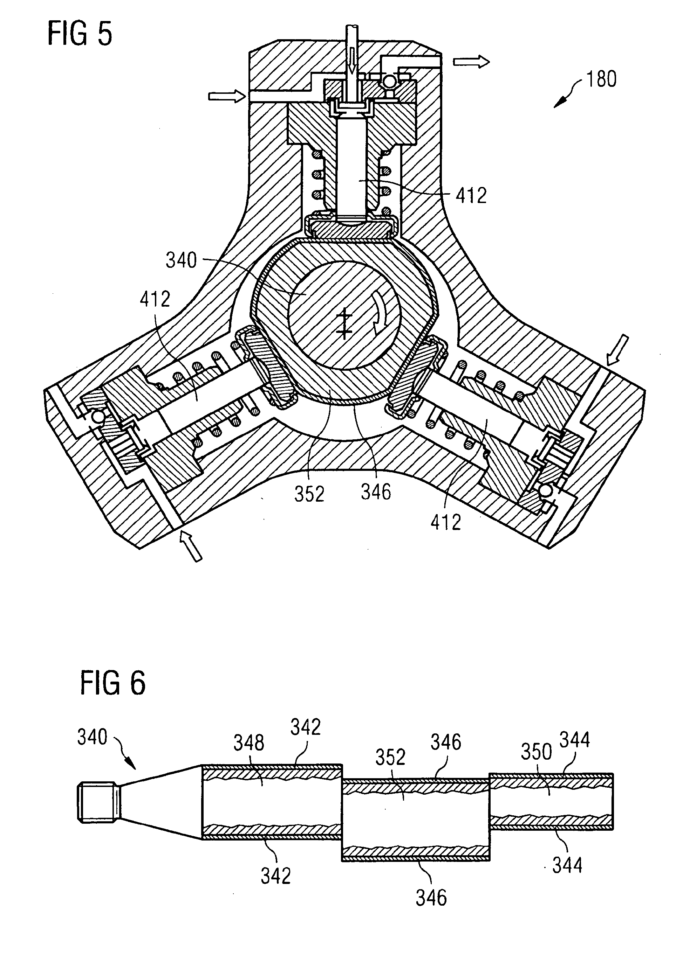

In Fig. 5 a cross-sectional view along line V-V of the fuel pump 180 of Fig. 4 is shown. Here, it is illustrated that the fuel pump 180 may comprise 3 plungers 412 and associated components for contacting cam lobe 352. Plunger 412 may coated with a polyamideimide based coating 414 with added lubricant and hard particle enhancements as described herein.

Cam lobe 352 may be also coated with the polyamideimide based coating 346 with added lubricant and hard particle enhancements as described herein.

As schematically shown in Fig. 6, the coatings 342, 344, 346 may be applied on the whole circumferences of cam lobe 352, and shaft parts 348, 350 of camshaft 340. Plunger 412 directly or indirectly contacts cam lobe 352. Accordingly, the basic pump operation of fuel lubricated fuel supply pump 180 corresponds to the fuel lubricated through the supply pump 18 shown in Figs. 1 and 2.

Fuel supply pump 180 may be used in fuel supply system 10 shown in Fig. 1, replacing fuel supply pump 18 of Fig. 2.

### Industrial Applicability

Referring to Figs. 1- 3, fuel pump 18 may be operated to pressurize a fluid (e.g., fuel) by drawing the fluid into one or more pumping chambers 86, reducing the size of pumping chambers 86, and then forcing the fluid through an outlet to common rail 20. The same applies to fuel pump 180 shown in Figs. 3-6.

The way in which fuel pump 18 operates will now be more specifically described in connection with one of pumping chambers 86. Starting from the beginning of the pumping cycle, plunger 80 is at bottom dead center and pumping chamber 86, which is normally full of fuel at this point, is at its maximum volume. As the peak of one of cam lobes 56 rotates to a position under tappet assembly 36, the cam lobe 56 forces tappet assembly 36, and therefore plunger assembly 43, upward. As plunger assembly 43 moves upward (according to the shape or contour of cam lobe 56), plunger 80 moves upward within aperture 54 in head 32 thereby reducing the volume of pumping chamber 86.

Generally, at about the same time plunger 80 begins to move upward, solenoid 67 is energized, which has the effect of moving a valve element (not shown) into the closed position where the pumping chamber 86 is closed off from fuel inlet passage. The pressure within pumping chamber 86 also helps to urge the valve element into the closed position. As a result of the pressure within pumping chamber 86, solenoid 67 may be deenergized during the pumping cycle without the valve element moving into the open position. As plunger 80 continues to move upward, the volume of pumping chamber 86 continues to reduce, which forces fuel out of pumping chamber 86 through a fuel outlet passage and eventually to common rail 20. The pumping cycle continues until plunger 80 reaches top dead center, which occurs when the peak of cam lobe 56 is below tappet assembly 36.

Generally, after plunger 80 reaches top dead center and begins the filling cycle, solenoid 67 is deenergized (if it wasn't already deenergized during the pumping cycle) and the pressure drops enough to allow the valve element to move, pursuant to the bias provided by spring 66, to the open position where fuel from a fuel inlet passage is again permitted to enter pumping chamber 86. As the peak of cam lobe 56 rotates past tappet assembly 36, the bias provided by resilient member 40 urges plunger assembly 43 and tappet assembly 36 back down toward camshaft 34. At this point, the backside of cam lobe 56 is below tappet assembly 36, which allows it to move back down. As plunger 80 moves downward within aperture 54 during the filling cycle, fuel continues to fill pumping chamber 86. When plunger 80 reaches bottom dead center, pumping chamber 86 will normally be full of fuel and at its maximum volume. The cycle then starts over again, with the cam lobe 56 urging tappet assembly 36 and plunger assembly 43 back up toward top dead center.

Control valve assembly 42 may be activated and deactivated at different times during the pumping and filling cycles to control how much fuel enters pumping chamber 86 during the filling cycle and/or to control whether pumping chamber 86 is coupled to fuel inlet passage (which is part of a fluid circuit that flows back to transfer pump 16 and therefore acts as a drain) during all or a portion of the pumping cycle. In this way, the output of the pump may be controlled. In an alternative arrangement perhaps the control valve assembly 42 may comprise one or more check valves.

The head assembly described herein is intended to reduce or minimize the number of sealing interfaces that are exposed to high pressure, to reduce or minimize the number of parts that make up the head assembly, and to reduce or minimize the number of instances where the alignment of two elements is dependent on a third element coupled between the two elements. To help accomplish this, head 32 and a valve element may be configured so that the valve element is received directly within aperture 54 formed in head 32 and so that the valve element seals directly against a portion of head 32. By configuring head 32 and said valve element in this way, any parts or components that have been provided between the valve element and the head of conventional pumps can be eliminated, thereby reducing the total number of parts of the pump. Reducing the total number of parts may help to reduce the total cost of the pump. Configuring head 32 and valve element in this way also results in a reduced number of sealing interfaces that are exposed to high pressure.

For at least the reasons stated above, pump 18 is believed to provide a cost effective alternative to at least some conventional pumps.

It is important to note that the construction and arrangement of the elements of the pump, including the head assembly, as shown in the exemplary and other alternative embodiments is illustrative only.

Although only a few embodiments of the pump and head assembly have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, orientations, etc.) without materially departing from the novel teachings and advantages of the subject matter recited.

For example, elements shown as integrally formed may be constructed of multiple parts or elements shown as multiple parts may be integrally formed, the operation of the interfaces (e.g., the interfaces between valve element, head, etc.) may be reversed or otherwise varied, and/or the length, width, or diameters of the structures and/or members or connectors or other elements of the assembly or system may be varied.

It should be noted that the elements and/or assemblies of the pump, including the head assembly, may be constructed from any of a wide variety of materials that provide sufficient strength, durability, and other relevant characteristics, from any of a wide variety of different manufacturing processes, and in any of a wide variety of colors, textures, combinations, and configurations. It should also be noted that the head assembly may be used in association with various types of pumps, including a variety of different piston pumps, with a variety of different mechanisms in a variety of different applications (high pressure applications, low pressure applications, etc.), and with a variety of different fluids (e.g., fuel, oil, hydraulic fluid, transmission fluid, water, coolant, etc.)

Examples of applications using kerosene-based fuels include military vehicles and ground handling equipment in airports where multiple fuel handling is risky and expensive. In these cases the ability to operate a diesel engine reliably on kerosene fuels is often a distinct logistical advantage and therefore a real sales differentiator.

When an engine stops the oil film in the bearings may disappear, thus allowing contact between the bearing and the rotating shaft. The next time the engine rotates there might be metal against metal scuffing until the oil film is generated to a point where it separates and supports the surfaces. A high percentage of engine wear may occur at start up during this period of oil film generation, which is commonly known as mixed lubrication operation. The application of the polyamideimide based coatings with added lubricant and hard particle enhancements as described herein to a fuel pump element configured to be used in a fuel lubricated fuel pump of the type mentioned herein, see Figs. 1-6, might enable the bearings to operate with reduced scuffing under mixed lubrication conditions and thus enable increased sales in high value applications and add robustness to the standard product. All the fuel pump components according to the present disclosure may be configured to be fuel lubricated at the friction bearing surface(s). In an alternative, at least one of the friction bearing surfaces or a sliding surface supported therein of such a fuel pump may be coated with a polyamideimide based coating 346 with added lubricant and hard particle enhancements as described herein.
All modifications mentioned herein are intended to be included within the scope of the present disclosure. Other substitutions, modifications, changes and omissions may be made in the design, operating conditions and arrangement of the exemplary and other alternative embodiments. Although the preferred embodiments of this invention have been described herein, improvements and modifications may be incorporated without departing from the scope of the following claims.

## Claims

1. A fuel pump component (34; 340; 400; 410) configured to be supported in a friction/plain bearing of a fuel lubricated fuel pump (18; 180), the fuel pump component (34; 340; 400; 410) comprising:
at least one friction bearing surface area provided with a polyamideimide based coating (101, 103, 104, 106; 342, 344; 346; 400, 410) with added lubricant and hard particle enhancements.

2. The fuel pump component (34; 340; 400; 410) of claim 1, wherein the fuel pump component is selected from the group consisting of a fuel pump shaft (34; 340) configured to be used in the fuel lubricated fuel pump (18; 180), a feed pump rotor (402) configured to be mounted on a fuel pump shaft (340) of the fuel lubricated fuel pump (180), a plunger (412) configured to be used in the fuel lubricated fuel pump (180), a feed pump plate (410), and a feed pump casing (400) configured to be used in the fuel lubricated fuel pump (180).

3. The fuel pump component (34; 340) of claim 2, wherein the fuel pump component is configured as a fuel pump shaft (34; 340), the fuel pump shaft (34; 340) comprising:
at least one rotating first bearing surface area configured to be supported in a first fuel lubricated bushing of the fuel supply pump (18; 180);
at least one second bearing surface area configured to support a movable component (58; 420); and
the at least one first and the at least one second bearing surface areas being provided with the polyamideimide based coating with added lubricant and hard particle enhancements.

4. The fuel pump component (340) of claim 2 and 3, further comprising:
a first shaft end configured to transmit a driving torque to the fuel pump shaft (340); and
a second shaft end opposed to the first opposed shaft end, the second shaft end being provided with the feed pump rotor (402).

5. The fuel pump component of claim 2, wherein the fuel pump component is configured as the feed pump rotor (402), the feed pump rotor (402) comprising:
a first rotating surface (404); and
a second rotating surface (418) opposite the first rotating surface (404);
at least one of the first and second rotating surfaces (404; 418) being provided with the polyamideimide based coating with added lubricant and hard particle enhancements.

6. The fuel pump component of claim 2, wherein the fuel pump component is configured as the plunger (412), the plunger (412) comprising:
a shaft configured to be supported in a friction/plain bearing, the shaft being at least partially provided with the polyamideimide based coating with added lubricant and hard particle enhancements.

7. The fuel pump component of claim 2, wherein the fuel pump component is configured as the feed pump casing (400), the feed pump casing (400) comprising:
a bearing surface area configured to contact a rotating feed pump rotor (402) of the fuel lubricated fuel pump (180), the bearing surface area being provided with the polyamideimide based coating with added lubricant and hard particle enhancements.

8. The fuel pump component of claim 2, wherein the fuel pump component is configured as the feed pump plate (410), the feed pump plate (410) comprising:
a bearing surface area configured to contact a rotating feed pump rotor (402) of the fuel lubricated fuel pump (180) and provided with the polyamideimide based coating with added lubricant and hard particle enhancements.

9. The fuel pump component (34; 340; 400; 410) of any one of the preceding claims, wherein the added lubricant is selected from the group consisting of graphite, MoS₂, WS₂, and PTFE.

10. The fuel pump component (34; 340; 400; 410) of any one of the preceding claims, wherein the hard particle enhancements are selected from the group consisting of TiO₂ AlsO₃, MgO, ZeO₂, SiC, Si₃N₄, glasses, and metallic hard materials.

11. The fuel pump component (34; 340; 400; 410) of any one of the preceding claims, wherein the polyamideimide based coating with added lubricant and hard particle enhancements corresponds to a coating sold commercially under IROX^{™} coating by Federal-Mogul Corp., U.S.A, or is a PTFE-free varnish layer based on PAI, comprising e.g. 5 to 15 wt% zine sulfide, 5 to 15 wt% graphite or MO₂ and 5 to 15 wt% TiO₂, wherein zine sulfide and TiO₂ have a particle size of, e.g. ≤ 0,7 µm.

12. A method for manufacturing a fuel pump component (34; 340; 400; 410) configured to be supported in a friction/plain bearing of a fuel lubricated fuel pump (18; 180), the method comprising the steps of:
providing the fuel pump component (34; 340; 400; 410) including at least one friction bearing surface area; and
depositing a polyamideimide based coating (101, 103, 104, 106; 342, 344; 346; 400, 410) with added lubricant and hard particle enhancements on the at least one friction bearing surface area.

13. The method of claim 12, wherein the added lubricant is selected from the group consisting of graphite, MoS₂, WS₂, and PTFE.

14. The method of claim 12 or 13, wherein the hard particle enhancements are selected from the group consisting of TiO₂, AlsO₃, MgO, ZeO₂, SiC, Si₃N₄, glasses, and metallic hard materials.

15. The method of any one of the claims 12-14, the polyamideimide based coating (101, 103, 104, 106; 342, 344; 346; 400, 410) with added lubricant and hard particle enhancements corresponding to the coating sold commercially under IROX^{™} coating by Federal-Mogul Corp., U.S.A, or is a PTFE-free varnish layer based on PAI, comprising e.g. 5 to 15 wt% zine sulfide, 5 to 15 wt% graphite or MO₂ and 5 to 15 wt% TiO₂, wherein zine sulfide and TiO₂ have a particle size of, e.g. ≤ 0,7 µm.

## Patentansprüche

1. Kraftstoffpumpenkomponente (34; 340; 400; 410), die dazu ausgebildet ist, in einem Reib- bzw. Gleitlager einer kraftstoffgeschmierten Kraftstoffpumpe (18; 180) gelagert zu werden, wobei die Kraftstoffpumpenkomponente (34; 340; 400; 410) aufweist:
mindestens einen Reiblageroberflächenbereich, der mit einer polyamidimidbasierten Beschichtung (101, 103, 104, 106; 342, 344; 346; 400, 410) mit zugesetztem Schmiermittel und Hartpartikelverstärkungen versehen ist.

2. Kraftstoffpumpenkomponente (34; 340; 400; 410) nach Anspruch 1, wobei die Kraftstoffpumpenkomponente aus einer Gruppe umfassend eine Kraftstoffpumpenwelle (34; 340), die zum Verwenden in der kraftstoffgeschmierten Kraftstoffpumpe (18; 180) ausgebildet ist, einen Förderpumpenrotor (402), der zum Anbringen an einer Kraftstoffpumpenwelle (340) der kraftstoffgeschmierten Kraftstoffpumpe (180) ausgebildet ist, einen Plunger (412), der zum Verwenden in der kraftstoffgeschmierten Kraftstoffpumpe (180) ausgebildet ist, eine Förderpumpenplatte (410) und ein Förderpumpengehäuse (400), das zum Verwenden in der kraftstoffgeschmierten Kraftstoffpumpe (180) ausgebildet ist, ausgewählt ist.

3. Kraftstoffpumpenkomponente (34; 340) nach Anspruch 2, wobei die Kraftstoffpumpenkomponente als eine Kraftstoffpumpenwelle (34; 340) ausgebildet ist, wobei die Kraftstoffpumpenwelle (34; 340) aufweist:
mindestens einen rotierenden ersten Lageroberflächenbereich, der zur Lagerung in einer ersten kraftstoffgeschmierten Hülse der Kraftstoffzufuhrpumpe (18; 180) ausgebildet ist,
mindestens einen zweiten Lageroberflächenbereich, der zur Lagerung einer bewegbare Komponente (58; 420) ausgebildet ist, und
wobei der mindestens eine erste und der mindestens eine zweite Lageroberflächenbereich mit der polyamidimidbasierten Beschichtung mit zugesetztem Schmiermittel und Hartpartikelverstärkungen versehen sind.

4. Kraftstoffpumpenkomponente (340) nach Anspruch 2 und 3, ferner aufweisend:
ein erstes Wellenende, das zum Übertragen eines Antriebsdrehmoments zu der Kraftstoffpumpenwelle (340) ausgebildet ist, und
ein zweites Wellenende, das dem ersten Wellenende gegenüberliegt, wobei das zweite Wellenende mit dem Förderpumpenrotor (402) versehen ist.

5. Kraftstoffpumpenkomponente nach Anspruch 2, wobei die Kraftstoffpumpenkomponente als der Förderpumpenrotor (402) ausgebildet ist, wobei der Förderpumpenrotor (402) aufweist:
eine erste rotierende Oberfläche (404), und
eine zweite rotierende Oberfläche (418), die der ersten rotierenden Oberfläche (404) gegenüberliegt,
wobei mindestens die erste und/oder die zweite rotierende Oberfläche (404; 418) mit der polyamidimidbasierten Beschichtung mit zugesetztem Schmiermittel und Hartpartikelverstärkungen versehen ist/sind.

6. Kraftstoffpumpenkomponente nach Anspruch 2, wobei die Kraftstoffpumpenkomponente als der Plunger (412) ausgebildet ist, wobei der Plunger (412) aufweist:
eine Welle, die zur Lagerung in einem Reib- bzw. Gleitlager ausgebildet ist, wobei die Welle mindestens teilweise mit der polyamidimidbasierten Beschichtung mit zugesetztem Schmiermittel und Hartpartikelverstärkungen versehen ist.

7. Kraftstoffpumpenkomponente nach Anspruch 2, wobei die Kraftstoffpumpenkomponente als das Förderpumpengehäuse (400) ausgebildet ist, wobei das Förderpumpengehäuse (400) aufweist:
einen Lageroberflächenbereich, der zum Berühren eines rotierenden Förderpumpenrotors (402) der kraftstoffgeschmierten Kraftstoffpumpe (180) ausgebildet ist, wobei der Lageroberflächenbereich mit der polyamidimidbasierten Beschichtung mit zugesetztem Schmiermittel und Hartpartikelverstärkungen versehen ist.

8. Kraftstoffpumpenkomponente nach Anspruch 2, wobei die Kraftstoffpumpenkomponente als die Förderpumpenplatte (410) ausgebildet ist, wobei die Förderpumpenplatte (410) aufweist:
einen Lageroberflächenbereich, der zum Berühren eines rotierenden Förderpumpenrotors (402) der kraftstoffgeschmierten Kraftstoffpumpe (180) ausgebildet ist, und mit der polyamidimidbasierten Beschichtung mit zugesetztem Schmiermittel und Hartpartikelverstärkungen versehen ist.

9. Kraftstoffpumpenkomponente (34; 340; 400; 410) nach einem der vorherigen Ansprüche, wobei das zugesetzte Schmiermittel aus der Gruppe umfassend Graphit, MoS₂, WS₂ und PTFE ausgewählt ist.

10. Kraftstoffpumpenkomponente (34; 340; 400; 410) nach einem der vorherigen Ansprüche, wobei die Hartpartikelverstärkungen aus der Gruppe umfassend TiO₂, AlSO₃, MgO, ZeO₂, SiC, Si₃N₄, Gläser und metallische Hartmaterialien ausgewählt ist.

11. Kraftstoffpumpenkomponente (34; 340; 400; 410) nach einem der vorherigen Ansprüche, wobei die polyamidimidbasierte Beschichtung mit zugesetztem Schmiermittel und Hartpartikelverstärkungen einer Beschichtung entspricht, die kommerziell als IROX^{™}-Beschichtung durch Federal-Mogul Corp., USA, verkauft wird, oder eine PTFE-freie Lackschicht basierend auf PAI ist, mit beispielsweise 5 bis 15 Gew.-% Zinksulfid, 5 bis 15 Gew.-% Graphit oder MO₂ und 5 bis 15 Gew.-% TiO₂, wobei das Zinksulfid und TiO₂ eine Partikelgröße von beispielsweise ≤ 0,7 µm aufweisen.

12. Verfahren zum Herstellen einer Kraftstoffpumpenkomponente (34; 340; 400; 410), die dazu ausgebildet ist, in einem Reib- bzw. Gleitlager einer kraftstoffgeschmierten Kraftstoffpumpe (18; 180) gelagert zu werden, wobei das Verfahren die Schritte aufweist:
Bereitstellen der Kraftstoffpumpenkomponente (34; 340; 400; 410) mit mindestens einem Reiblageroberflächenbereich, und
Aufbringen einer polyamidimidbasierten Beschichtung (101, 103, 104, 106; 342, 344; 346; 400, 410) mit zugesetztem Schmiermittel und Hartpartikelverstärkungen auf dem mindestens einen Reiblageroberflächenbereich.

13. Verfahren nach Anspruch 12, wobei das zugesetzte Schmiermittel aus der Gruppe umfassend Graphit, MoS₂, WS₂ und PTFE ausgewählt wird.

14. Verfahren nach Anspruch 12 oder 13, wobei die Hartpartikelverstärkungen aus der Gruppe umfassend TiO₂, AlSO₃, MgO, ZeO₂, SiC, Si₃N₄, Gläser und metallische Hartmaterialien ausgewählt wird.

15. Verfahren nach einem der Ansprüche 12-14, wobei die polyamidimidbasierte Beschichtung (101, 103, 104, 106; 342, 344; 346; 400, 410) mit zugesetztem Schmiermittel und Hartpartikelverstärkungen der Beschichtung entspricht, die kommerziell als IROX^{™}-Beschichtung durch Federal-Mogul Corp., USA, verkauft wird, oder eine PTFE-freie Lackschicht basierend auf PAI ist, mit beispielsweise 5 bis 15 Gew.-% Zinksulfid, 5 bis 15 Gew.-% Graphit oder MO₂ und 5 bis 15 Gew.-% TiO₂, wobei das Zinksulfid und TiO₂ eine Partikelgröße von beispielsweise ≤ 0,7 µm aufweisen.

## Revendications

1. Composant de pompe à carburant (34 ; 340 ; 400 ; 410) agencé pour être supporté dans un palier lisse de friction d'une pompe à carburant (18 ;180) lubrifiée par le carburant, de composant de pompe à carburant (34 ; 340 ; 400 ; 410) comprenant :
au moins une aire de surface de palier de friction muni d'un revêtement à base de polyamide-imide (101, 103, 104, 106; 342, 344 ; 346 ; 400, 410) avec du lubrifiant ajouté et des renforcements de particules dures.

2. Composant de pompe à carburant (34 ; 340 ; 400 ; 410) selon la revendication 1, dans lequel le composant de pompe à carburant est choisi dans le groupe constitué d'un arbre (34 ; 340) de pompe à carburant agencé pour être utilisé dans la pompe à carburant lubrifiée par le carburant (18 ; 180), un rotor de pompe d'alimentation (402) agencé pour être monté sur un arbre de pompe à carburant (340) de la pompe à carburant lubrifiée par le carburant (180), un plongeur (412) agencé pour être utilisé dans la pompe à carburant (180) lubrifiée par le carburant, une plaque (410) de pompe d'alimentation, et un carter (400) de pompe d'alimentation agencé pour être utilisé dans la pompe à carburant (180) lubrifiée par le carburant.

3. Composant de pompe à carburant (34 ; 340) selon la revendication 2, dans lequel le composant de pompe à carburant est agencé en tant qu'arbre (34 ; 340) de pompe à carburant, l'arbre (34 ; 340) de pompe à carburant comprenant :
au moins une première aire de surface de palier rotative agencée pour être supportée dans une première douille lubrifiée de carburant de la pompe (18 ; 180) d'alimentation en combustible ;
au moins une deuxième aire de surface de palier agencée pour supporter un élément mobile (58 ; 420) ; et
les au moins une première et une deuxième aire de surface de palier étant munies d'un revêtement à base de polyamide-imide avec du lubrifiant ajouté et des renforcements en particules dures.

4. Composant de pompe à carburant (340) selon les revendications 2 et 3, comprenant en outre :
une première extrémité d'arbre agencée pour transmettre un couple d'entraînement à l'arbre (340) de pompe à carburant ; et
une deuxième extrémité d'arbre opposée à la première extrémité d'arbre, la deuxième extrémité d'arbre étant munie du rotor (402) de pompe d'alimentation.

5. Composant de pompe selon la revendication 2, dans lequel le composant de pompe est agencé en tant que le rotor (402) de pompe d'alimentation, le rotor (402) de pompe d'alimentation comprenant :
une première surface rotative (404) ; et
une deuxième surface rotative (418) opposée à la première surface rotative (404) ;
au moins une des première et une deuxième surfaces rotatives (404; 418) étant munies d'un revêtement à base de polyamide-imide avec du lubrifiant et des renforcements en particules dures.

6. Composant de pompe selon la revendication 2, dans lequel le composant de pompe est agencé en tant que le plongeur (412), le plongeur (412) comprenant :
un arbre agencé pour être supporté dans un palier lisse de friction, l'arbre étant au moins partiellement muni du revêtement à base de polyamide-imide avec du lubrifiant ajouté et les renforcements en particules dures.

7. Composant de pompe selon la revendication 2, dans lequel le composant de pompe est agencé en tant que le carter (400) de pompe d'alimentation, le carter (400) de pompe d'alimentation comprenant :
une aire de surface de palier agencée pour être en contact avec un rotor (402) rotatif de pompe d'alimentation de la pompe à carburant (180) lubrifiée par le carburant, l'aire de surface de palier étant munie du revêtement à base de polyamide-imide avec du lubrifiant ajouté et les renforcements en particules dures.

8. Composant de pompe selon la revendication 2, dans lequel le composant de pompe est agencé en tant que la plaque (410) de pompe d'alimentation, la plaque (410) de pompe d'alimentation comprenant :
une aire de surface de palier agencée pour être en contact avec un rotor (402) rotatif de pompe d'alimentation de la pompe à carburant (180) lubrifiée par le carburant et munie du revêtement à base de polyamide-imide avec du lubrifiant ajouté et les renforcements en particules dures.

9. Composant de pompe à carburant (34 ; 340 ; 400 ; 410) selon l'une quelconque des revendications précédentes, dans lequel le lubrifiant ajouté est choisi dans le groupe constitué de graphite, MoS₂, WS₂ et PTFE.

10. Composant de pompe à carburant (34 ; 340 ; 400 ; 410) selon l'une quelconque des revendications précédentes, dans lequel les renforcements de particules dures sont choisis dans le groupe constitué de TiO₂, AlSO₃, MgO, ZeO₂, SiC, Si₃N₄, les verres, et les matériaux métalliques durs.

11. Composant de pompe à carburant (34 ; 340 ; 400 ; 410) selon l'une quelconque des revendications précédentes, dans lequel le revêtement à base de polyamide-imide avec du lubrifiant ajouté et des renforcements de particules dures correspond à un revêtement vendu commercialement en tant que revêtement IROX® par Federal-Mogul Corp., U.S.A. , ou est une couche de vernis sans PTFE à base de PAI, comprenant par exemple 5 à 15 % en poids de sulfure de zinc, 5 à 15 % en poids de graphite ou de MO₂ et 5 à 15 % de TiO₂, où le sulfure de zinc et le TiO₂ présentent une taille de particules de, par exemple ≤ 0,7 µm.

12. Procédé de fabrication d'un composant de pompe à carburant (34 ; 340 ; 400 ; 410) agencée pour être supporté dans un palier lisse de friction d'une pompe à carburant (18 ; 180) lubrifiée par le carburant, le procédé comprenant les étapes de :
amenée du composant de pompe à carburant (34 ; 340 ; 400 ; 410) comprenant au moins une aire de surface de palier de friction ; et
dépôt d'un revêtement à base de polyamide-imide (101, 103, 104, 106 ; 342, 344 ; 346 ; 400, 410) avec du lubrifiant ajouté et des renforcements de particules dures sur au moins l'aire de surface de palier de friction.

13. Procédé selon la revendication 12, dans lequel le lubrifiant ajouté est choisi dans le groupe constitué du graphite, MoS₂, WS₂, et PTFE.

14. Procédé selon la revendication 12 ou 13, dans lequel les renforcements de particules dures sont choisis dans le groupe constitué de TiO₂, AlSO₃, MgO, ZeO₂, SiC, Si₃N₄, les verres, et les matériaux métalliques durs.

15. Procédé selon l'une quelconque des revendications 12 à 14, le revêtement à base de polyamide-imide (101, 103, 104, 106; 342, 344; 346; 400, 410) avec du lubrifiant ajouté et des renforcements de particules dures correspondant au revêtement vendu commercialement en tant que revêtement IROX® par Federal-Mogul Corp., U.S.A. , ou est une couche de vernis sans PTFE à base de PAI, comprenant par exemple 5 à 15 % en poids de sulfure de zinc, 5 à 15 % en poids de graphite ou de MO₂ et 5 à 15 % de TiO₂, où le sulfure de zinc et le TiO₂ présentent une taille de particules de, par exemple ≤ 0,7 µm.
